(19) Europäisches Patentamt

European Patent Office

Office européen des brevets

(11) Veröffentlichungsnummer: **0 379 023**

**A1**

## (12) EUROPÄISCHE PATENTANMELDUNG

(21) Anmeldenummer: **90100299.8**

(22) Anmeldetag: **08.01.90**

(51) Int. Cl.⁵: **A23G 1/00, A23G 1/04**

(30) Priorität: **16.01.89 DE 3901056**

(43) Veröffentlichungstag der Anmeldung:
**25.07.90 Patentblatt 90/30**

(84) Benannte Vertragsstaaten:
**AT BE CH DE DK ES FR GB GR IT LI LU NL SE**

(71) Anmelder: **Jacobs Suchard AG**
**Seefeldquai 17**
**CH-8008 Zürich(CH)**

(72) Erfinder: **Vogt, Siegfried**
**Gaussstrasse 30**
**D-2804 Lilienthal(DE)**
Erfinder: **Krempel, Wolfgang**
**Max-Jahn-Weg 11**
**D-2800 Bremen(DE)**
Erfinder: **Gabriel-Jürgens, Hans-Otto**
**Hemelinger Rampe 51**
**D-2800 Bremen 44(DE)**

(74) Vertreter: **Bolte, Erich, Dipl.-Ing.**
**c/o Meissner, Bolte & Partner Patentanwälte**
**Hollerallee 73**
**D-2800 Bremen 1(DE)**

(54) **Verfahren zum Herstellen von Schokoladepulver sowie Schokoladepulver.**

㉗ Verfahren zum Herstellen von Schokoladepulver sowie Schokoladepulver.

Gegenstand der vorliegenden Erfindung ist ein Verfahren zur Herstellung eines Schokoladepulvers mit verbesserten Eigenschaften hinsichtlich Geschmack und Auflöseverhalten, wobei dieses Verfahren
- die Herstellung von mit Lecithin angereichertem Kakaopulver;
- die Vermengung des mit Lecithin angereicherten Kakaopulvers mit Zutaten, wie Saccharose, Dextrose, Lactose und Kochsalz, zu einem Pulvergemisch; und
- die Verarbeitung zu Partikeln einer Größe über 5 mm
umfaßt.

EP 0 379 023 A1

Die Erfindung betrifft ein Verfahren zum Herstellen von in kalter Flüssigkeit, insbesondere in Milch, löslichem Schokoladepulver mit einem hohen Anteil an schwach entöltem Kakaopulver.

Unter Schokoladepulver versteht man allgemein eine Mischung aus mindestens 32 % schwach entöltem Kakaopulver (trocken, 20 % - 22 % Fett) und Sccharose sowie gegebenenfalls weiteren Zutaten. Bevorzugt wird Schokoladepulver zum Backen verwendet. Zur Zübereitung von Getränken ist Schokoladepulver weniger geeignet.

Die im Markt befindlichen kakaohaltigen Produkte zur Selbstzubereitung von Getränken sind definitionsgemäß keine Schokoladepulver, sondern kakaohaltige Instant-Getränkepulver. Im Unterschied zu Schokoladepulver werden sie unter Verwendung von Kakaopulver mit niedrigem Fettgehalt (z. B. 11 %) hergestellt. Der Gehalt an Kakaopulver liegt unter 20 % und damit niedriger als im Schokoladepulver. Die Instant-Pulver sind üblicherweise mehr oder weniger in heißer und kalter Milch löslich und erheben keinen Anspruch auf besonderen Schokoladengeschmack. Sie sind z. B. mit Zimt, Vanille, Nuß oder anderen Aromastoffen angereichert und werden unter Phantasienamen vertrieben. Das Auflöseverhalten bzw. die Benetzbarkeit dieser Pulver wird durch den Einsatz von stark entöltem Kakao (ca. 11 % Fett) sowie den Einsatz von ca. 1 % Lecithin als Emulgator begünstigt. Ein Nachteil dieser Produkte liegt darin, daß sie keinen ausgeprägten Schokoladengeschmack aufweisen.

Zur Verbesserung des Schokoladengeschmacks ist eine Erhöhung des Kakaoanteils im Pulver für die Zübereitung des Getränks erforderlich. Schokoladepulver im Sinne der Vorschriften enthält einen Anteil von mindestens 32 % an schwach entöltem Kakaopulver (mit einem Fettanteil von 20 % - 22 %). Dieser deutlich erhöhte Fettanteil im Getränkepulver verschlechtert die Löslichkeit in kalten Flüssigkeiten, insbesondere in Milch. Die Zugabe von Lecithin verbessert zwar die Löslichkeit des Kakao- bzw. Schokoladepulvers in Milch oder dgl. Es ist jedoch schwierig, einem Kakaopulver mit hohem Fettanteil (schwach entölt) einen nennenswerten, nämlich zulässigen Anteil an Lecithin hinzuzuführen, weil dieses fettähnliche Produkt durch das Kakaopulver nicht mehr aufgenommen wird und zu Klumpenbildung führt.

Der Erfindung liegt die Aufgabe zugrunde, ein kakaohaltiges Getränkepulver bzw. ein Verfahren zum Herstellen desselben vorzuschlagen, welches einen hohen Anteil an schwach entöltem Kakaopulver enthält, insbesondere mit einem für Schokoladepulver geforderten Anteil.

Zur Lösung dieser Aufgabe besteht das erfindungsgemäße Verfahren in folgenden Schritten:

a) herstellen von schwach entöltem Kakaopulver (Fettstufe 20 % - 22 %) mit einem Anteil an Lecithin, derart, daß der Lecithingehalt im Schokoladepulver 0,5 % - 1,5%, vorzugsweise 0,9 %, entspricht,

b) vermengen dieses Kakaopulvers mit Zutaten, wie Saccharose, Dextrose, Lactose, Kochsalz, zu einem Pulvergemisch mit einem Anteil an Kakaopulver von mindestens 32 %.

Ein in dieser Weise hergestelltes Schokoladepulver ist aufgrund des relativ hohen Anteils an Lecithin in kalter Flüssigkeit, auch in kalter Milch, lösbar. Durch den hohen Anteil an schwach entöltem Kakaopulver entspricht das erfindungsgemäß hergestellte Getränkepulver der Qualität eines Schokoladepulvers.

Ein besonderes Thema der Erfindung ist die Herstellung des schwach entölten Kakaopulvers mit einem relativ hohen Anteil an Lecithin von etwa 2,5 %, bezogen auf die Menge des Kakaopulvers. Überraschenderweise kann ein derartiges Kakaopulver durch die Erfindung dadurch hergestellt werden, daß wenigstens zwei unterschiedlich zusammengesetzte Kakaopulver-Zwischenprodukte miteinander vermischt werden, von denen das eine aus schwach entöltem Kakaopulver mit einem verhältnismäßig hohen Fettgehalt von etwa 22 % -24 % und das andere aus einem stark entölten Kakaopulver mit einem Fettgehalt von etwa 18 % - 20 % und einem hohen Anteil an Lecithin von etwa 4 % - 6 %, insbesondere 5 %, besteht.

Durch dieses Verfahren wird überraschenderweise erreicht, daß die fertige Kakaomischung einen verhältnismäßig hohen Fettgehalt von etwa 21 % und einen ebenfalls hohen Lecithingehalt von etwa 2,5 % aufweist. Dieses aus den beiden Kakaopulver-Zwischenprodukten durch Vermischen hergestellte stark lecithinierte Kakaopulver kann jetzt in der beschriebenen Weise zur Herstellung des Getränkepulvers mit den Eigenschaften eines Schokoladepulvers weiterverarbeitet werden.

Für die Verbesserung der Löslichkeit des kakaohaltigen Pulvers in kalter Flüssigkeit, insbesondere Milch, hat sich weiterhin überraschend als vorteilhaft erwiesen, die Korngröße des fertigen Getränkepulvers zu einzustellen, daß keine Feinanteile im Pulver vorhanden sind, sondern nur Korngrößen oberhalb von etwa 0,5 mm.

Zu diesem Zweck wird das Schokoladepulver nach dessen Herstellung einem (ersten) Siebvorgang unterzogen, um Feinanteile des Pulvers abzusieben. Von besonderder Bedeutung ist, daß danach, nämlich nach einer längeren Lagerung des Getränkepulvers von z. B. drei Tagen, unmittelbar vor der Verpackung desselben nochmals ein Absieben von Feinanteilen erfolgt, nämlich mit einem Sieb der Maschengröße von etwa 0,5 mm. Das danach verpackte Getränkepulver ist trotz dem hohen Anteil an schwach entöltem Kakaopulver in kalter Milch etc. gut löslich.

Lecithin kann auf verschiedene Weise mit dem (stark entölten) Kakaopulver bzw. dem Kakaopulver-Zwischenprodukt verbunden werden. Vorteilhafterweise kann so vorgegangen werden, daß ein Kakao-Preßkuchen der Fettstufe 'stark entölt', also mit einem Fettgehalt von 18 % - 20 % (Gew.%), hergestellt und zu groben Bruchstücken zerkleinert wird. Auf diese wird sodann flüssiges Lecithin durch Spühen aufgebracht. Anschließend werden die lecithinierten Bruchstücke zu Pulver vermahlen. Damit ist das lecithinhaltige, stark entölte Kakaopulver-Zwischenprodukt geschaffen, wel ches zusammen mit dem sehr schwach entölten Kakaopulver und weiteren Bestandteilen das Schokoladepulver bildet.

Die beiden Kakaopulver-Zwischenprodukte können im Verhältnis 1 : 1 im Schokolade- bzw. Getränkepulver vorhanden sein. Das Pulver wird im Zuge der Verarbeitung unter Einwirkung von Wasser und/oder Wasserdampf agglomeriert, sodann getrocknet und danach dem ersten Siebvorgang zum Absieben von Feinanteilen unterzogen.

Das Lecithin kann bei dem vorgenannten Verfahren auch unmittelbar auf den Preßkuchen aufgesprüht werden vor dessen Zerkleinerung.

Damit das fertige Getränke- bzw. Schokoladepulver einen Lecithingehalt von etwa 0,9 % aufweist, muß das lecithinhaltige Kakaopulver-Zwischenprodukt einen Lecithingehalt von etwa 5 % aufweisen.

Während der Lagerung des fertigen, agglomerierten Pulvergemisches in verhältnismäßig kleinen Behältnissen, insbesondere in 25 kg-Säcken, härtet das Material weiter aus. Die bei dem anschließenden (zweiten) Siebvorgang abgesonderten Feinanteile (unter 0,5 mm) werden in den Produktionsprozeß zurückgeführt.

Im folgenden wird beispielhaft die Zusammensetzung eines nach dem erfindungsgemäßen Verfahren hergestellten kaltlöslichen Schokoladepulvers angegeben:

| Beispiel: Schokoladepulver | |
|---|---|
| Saccharose | 40,850 Gew.% |
| Kakaopulver I - Kakaopulver-Zwischenprodukt - (Fettgehalt 19 %, Lecithingehalt 5 %) | 17,425 Gew.% |
| Kakaopulver II - Kakaopulver-Zwischenprodukt - (Fettgehalt 23 %) | 17,425 Gew.% |
| Dextrose wasserfrei | 19,600 Gew.% |
| Lactose | 4,500 Gew.% |
| Kochsalz | 0,200 Gew.% |

Der Lecithinanteil von 5 % im Kakaopulver I führt zu einem Lecithinanteil von 2,5 % in der Kakaomischung (= mit Lecithin angereichteres Kakaopulver im Sinne von Patentanspruch 1, Verfahrensstufe A); im Schokoladepulver beträgt der Lecithingehalt dann ca. 0,9 %.

## Ansprüche

1. Verfahren zum Herstellen von in kalter Flüssigkeit, insbesondere in Milch, löslichem Schokoladepulver mit einem hohen Anteil an schwach entöltem Kakaopulver, **gekennzeichnet durch** folgende Verfahrensschritte:

a) herstellen von schwach entöltem Kakaopulver (Fettstufe 20 % - 22 %) mit einem Anteil an Lecithin, derart, daß der Lecithingehalt im Schokoladepulver 0,5 % - 1,5%, vorzugsweise 0,9 %, entspricht,

b) vermengen dieses Kakaopulvers mit Zutaten, wie Saccha rose, Dextrose, Lactose, Kochsalz, zu einem Pulvergemisch mit einem Anteil an Kakaopulver von mindestens 32 %.

2. Verfahren nach Anspruch 1, dadurch gekennzeichnet, daß zum Herstellen von schwach entöltem Kakaopulver mit einem hohen Gehalt an Lecithin (0,5 % - 1,5%, insbesondere 0,9 %) wenigstens zwei unterschiedliche Kakaopulver-Zwischenprodukte miteinander vermischt werden, von denen das eine aus schwach entöltem Kakaopulver mit einem verhältnismäßig hohen Fettgehalt von etwa 22 % - 24 % und das andere aus einem entölten Kakaopulver mit einem Fettgehalt von etwa 18 % - 20 % sowie einem hohen Gehalt an Lecithin von etwa 4 % - 6 %, insbesondere 5 %, besteht.

3. Verfahren nach Anspruch 1 oder 2, dadurch gekennzeichnet, daß das Pulvergemisch zu Partikeln mit einer Größe von über 0,5 mm verarbeitet wird.

4. Verfahren nach Anspruch 2 sowie einem oder mehreren der weiteren Ansprüche, dadurch gekennzeichnet, daß die beiden Kakaopulver-Zwischenprodukte im Verhältnis 1 : 1 vermengt werden.

5. Verfahren nach Anspruch 2 sowie einem oder mehreren der weiteren Ansprüche, gekennzeichnet durch folgende Verfahrensschritte zum Herstellen des lecithinhaltigen Kakaopulver-Zwischenprodukts:

a) Kakao-Preßkuchen mit einem Fettgehalt von 18 - 20 Gew.% wird in grobe Bruchstücke zerkleinert.

b) sodann werden die Bruchstücke mit flüssigem Lecithin besprüht,

c) danach werden die lecithinierten Bruchstücke zu Kakaopulver vermahlen.

6. Verfahren nach Anspruch 1 sowie einem oder mehreren der weiteren Ansprüche, dadurch gekennzeichnet, daß das unter Einwirkung von Wasser und/oder Wasserdampf agglomerierte und anschließend getrocknete Schokoladepulver einem (ersten) Siebvorgang unterzogen wird zum Absieben von Feinanteilen.

7. Verfahren nach Anspruch 6 sowie einem oder mehreren der weiteren Ansprüche, dadurch gekennzeichnet, daß das Schokoladepulver nach einer Stabilisierungsphase bzw. Ruhephase von mehreren, insbesondere drei Tagen, erneut einem Siebvorgang unterzogen wird zum Absieben von Feinanteilen, derart, daß das für die Verpackung fertige Schokoladepulver eine Korngröße von mehr als etwa 0,5 mm aufweist.

8. Schokoladepulver, hergestellt nach dem Verfahren nach einem oder mehreren der vorangehenden Ansprüche, **gekennzeichnet durch** ein Pulvergemisch folgender Zusammensetzung:

32 - 36 Gew.% (bezogen auf das Pulvergemisch) mit Lecithin angereichertes Kakaopulver,

38 - 42 Gew.% Saccharose,

18 - 20 Gew.% Dextrose,

4 - 6 Gew.% Lactose,

0,2 Gew.% Kochsalz.

9. Schokoladepulver nach Anspruch 8, gekennzeichnet durch einen Gehalt von 32 - 36 Gew.% schwach entöltem Kakaopulver.

10. Schokoladepulver nach Anspruch 8 oder 9, gekennzeichnet durch einen Lecithingehalt von 0,8 - 1 Gew.%, bezogen auf die Gesamtmenge des Schokoladepulvers.

11. Schokoladepulver nach Anspruch 8 bis 10, gekennzeich net durch eine Partikelgröße von mehr als etwa 0,5 mm.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN, Band 12, Nr. 159 (C-495)[3006], 14. Mai 1988; & JP-A-62 272 941 (MORINAGA & CO. LTD)27-11-1987 <br> * Zusammenfassung * <br> --- | 1,3,5,8 -11 | A 23 G 1/00 <br> A 23 G 1/04 |
| Y <br> A | US-A-4 308 288 (HARA et al.) <br> * Patentansprüche 1-8; Beispiele 4,5 * <br> --- | 1,3,5,8 -11 <br> 7 | |
| Y | GB-A- 955 756 (BORDEN CO.) <br> * Seite 1, Zeilen 37-74; Patentansprüche 1-3 * <br> --- | 8 | |
| A | GB-A-1 022 775 (NESTLE) <br> * Beispiel * <br> --- | 1,3,8,9 ,11 | |
| A | GB-A-1 079 837 (MORINAGA) <br> ----- | | |

RECHERCHIERTE SACHGEBIETE (Int. Cl.5)

A 23 G

Der vorliegende Recherchenbericht wurde für alle Patentansprüche erstellt

| Recherchenort | Abschlußdatum der Recherche | Prüfer |
|---|---|---|
| DEN HAAG | 09-04-1990 | LEPRETRE F.G.M.J. |